# EUROPEAN PATENT APPLICATION

(11) **EP 4 768 393 A1**
(43) Date of publication of application: **01.07.2026**
(21) Application number: 25209734.0
(22) Date of filing: 20.10.2025
(51) Int. Cl.: B64D 27/355, B60L 58/33, B64D 33/08, B64C 27/82

(54) **FUEL CELL COOLING SYSTEM AS VEHICLE CONTROL MECHANISM**

(30) Priority: 27.12.2024 US 202463739397 P; 19.05.2025 US 202519211964
(71) Applicant: Honeywell International s.r.o, 148 00 Chodov (CZ)
(72) Inventor: KOTABA, Ondrej, Charlotte, 28202 (US); TRNKA, Pavel, Charlotte, 28202 (US)
(74) Representative: Ingrassia, Fisher & Lorenz UK Ltd.

(57) **Abstract**

A fuel cell cooling system is provided. The fuel cell cooling system is a vehicle system that may be a yaw control mechanism for a vehicle. Additionally or alternatively, the fuel cell cooling system may be a pitch control mechanism. A vehicle may include a fuel cell system and a fuel cell cooling system. The fuel cell cooling system may include one or more heat exchangers connected to the fuel cell system to cool a first cooling medium; one or more air motive flow sources configured to receive air from one or more air inlets and generate air motive flow through the one or more heat exchangers; and one or more directional thrusters configured to receive air motive flow passed through the one or more heat exchangers and direct the air motive flow as thrust.

## Description

This invention was made with Government support under 101101967 awarded by Clean Aviation Joint Undertaking "CAJU". The Government has certain rights in the invention.

### RELATED APPLICATION

This application claims priority to United States Provisional Application serial number 63/739,397 (entitled FUEL CELL COOLING SYSTEM AS YAW CONTROL MECHANISM, filed December 27, 2024) and United States Application serial number 19/211,964 (entitled FUEL CELL COOLING SYSTEM AS VEHICLE CONTROL MECHANISM, filed May 19, 2025) which is incorporated herein by reference.

### BACKGROUND

Vehicles may use fuel cells to produce electricity for various applications, such as to provide or generate electrical power. Such vehicles may include aircraft (e.g., planes, helicopters, drones, etc.), automobiles, watercraft, etc. The integration of fuel cell systems poses challenges for conventional vehicles, including for the provision of fuel cell cooling.

### SUMMARY

Various examples described herein relate to systems, apparatuses, and methods for fuel cell cooling, and in particular to fuel cell cooling as a yaw control mechanism.

An improved vehicle system includes a fuel cell system comprising one or more coolant loops and one or more heat exchangers connected to the fuel cell system to cool the one or more coolant loops. One or more air motive flow sources are configured to receive air from one or more air inlets and generate air motive flow through the one or more heat exchangers. One or more directional thrusters are configured to receive air motive flow passed through the one or more heat exchangers and direct the air motive flow as thrust. The one or more heat exchangers are configured to cool the one or more coolant loops with the air motive flow passing through the one or more heat exchangers

In some examples, the vehicle system is configured to utilize the thrust for vehicle attitude, pitch, or yaw control utilizing the Coanda effect on a control surface of the vehicle.

In some examples, the directional thruster is comprised of a rotating drum and a drum angle control actuator, a controllable vane with actuator, one or more flow control valves, or a combination thereof.

In some examples, the one or more coolant loops include a two-phase pumped loop.

In some examples, the vehicle is a helicopter, an airplane, or a drone. In some examples, the vehicle is a helicopter and the one or more heat exchanger, the one or more air motive flow sources, and the one or more directional thrusters are located in a tail boom of the helicopter.

In a further example, a method of controlling a vehicle includes providing a vehicle system that includes a fuel cell system comprising one or more coolant loops, one or more heat exchangers connected to the fuel cell system to cool the one or more coolant loops, one or more air motive flow sources configured to receive air from one or more air inlets and generate air motive flow through the one or more heat exchangers, and one or more directional thrusters configured to receive air motive flow passed through the one or more heat exchangers and direct the air motive flow as thrust.

The one or more heat exchangers are configured to cool the one or more coolant loops with the air motive flow passing through the one or more heat exchangers. The method includes receiving air from one or more air inlets, generating, with the one or more air motive flow sources, air motive flow through the one or more heat exchangers, cooling, with the air motive flow, a cooling medium circulating in the heat exchangers and the one or more coolant loops, and controlling movement of the vehicle with the thrust.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will also be appreciated that the scope of the disclosure encompasses many potential embodiments in addition to those here summarized, some of which will be further described below.

### BRIEF DESCRIPTION OF THE DRAWINGS

Having thus described certain example embodiments of the present disclosure in general terms, reference will now be made to the accompanying drawings, which are not necessarily drawn to scale, and wherein:
FIG. 1 illustrates a vehicle according to an example embodiment;
FIG. 2 illustrates a vehicle with a directional thruster of a controllable vane according to an example embodiment;
FIG. 3 illustrates a vehicle with a directional thruster of flow control values according to an example embodiment;
FIG. 4 illustrates a vehicle with a directional thruster of a rotating drum according to an example embodiment;
FIG. 5 illustrates a flowchart of example operations for a fuel cell cooling system according to an example embodiment;
FIG. 6 illustrates a flowchart of example operations for a vehicle control system according to an example embodiment;
FIG. 7 illustrates a flowchart of example operations for cooling a cooling medium according to an example embodiment;
FIG. 8 illustrates a block diagram of an example computing device in accordance with various example embodiments of the present disclosure.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communications circuitry, input/output circuitry, and the like. In some embodiments, other elements may provide or supplement the functionality of particular circuitry.

An improved fuel cell cooling system is configured with a vehicle to both cool a fuel cell and control movement of the vehicle.

Electrical energy may be produced for a vehicle from fuel. One example of fuel is hydrogen. A hydrogen fuel cell generates electricity but also produces byproducts of water and heat. This heat may be waste heat that requires cooling. To cool the fuel cell(s), a fuel cell cooling system is used. The fuel cell cooling system of a vehicle may include radiators or heat exchangers that are used to cool a cooling medium (e.g., a coolant liquid such as, but not limited to, an ethylene glycol and water mixture) as it moves through the heat exchangers or radiators. Air flow may be provided to the radiator or heat exchanger to cool the cooling medium and, thus, the fuel cell system. The term "through" is used to describe airflow past surfaces of the radiator or heat exchanger to remove heat and thus cool the cooling medium. Example vehicles include aircraft (e.g., helicopters, airplanes, unmanned aerial vehicles, etc.).

In one example, a helicopter includes a fuel cell to generate electricity. The electricity may be used for, among other things, powering mechanical systems (e.g., rotor(s)) and/or electrical systems (e.g., flight control system(s), charge batteries, etc.). While generating electricity, the fuel cell system also generates heat. The vehicle may include a fuel cell cooling system that is used to cool the fuel cell. The fuel cell cooling system may include one or more air motive flow sources (e.g., blowers, compressors, etc.) to take air from an air inlet and generate air flow. The air flow may be directed over radiators or heat exchangers that provide cooling for the fuel cell.

The air flow may, after cooling the fuel cell, be used by the vehicle as a control mechanism. For example, the air flow generated by the fuel cell cooling system may be used to control the attitude (e.g., yaw, pitch, and/or roll) of a vehicle by directing the air flow as thrust or even via a blown-air Coanda effect on a control surface of the vehicle. In various embodiments, the air flow from the air motive flow source(s) may be used as thrust and a directional thruster may direct the thrust in a controlled direction to provide vehicle attitude control of the vehicle.

### Example Systems, Apparatuses, and Methods

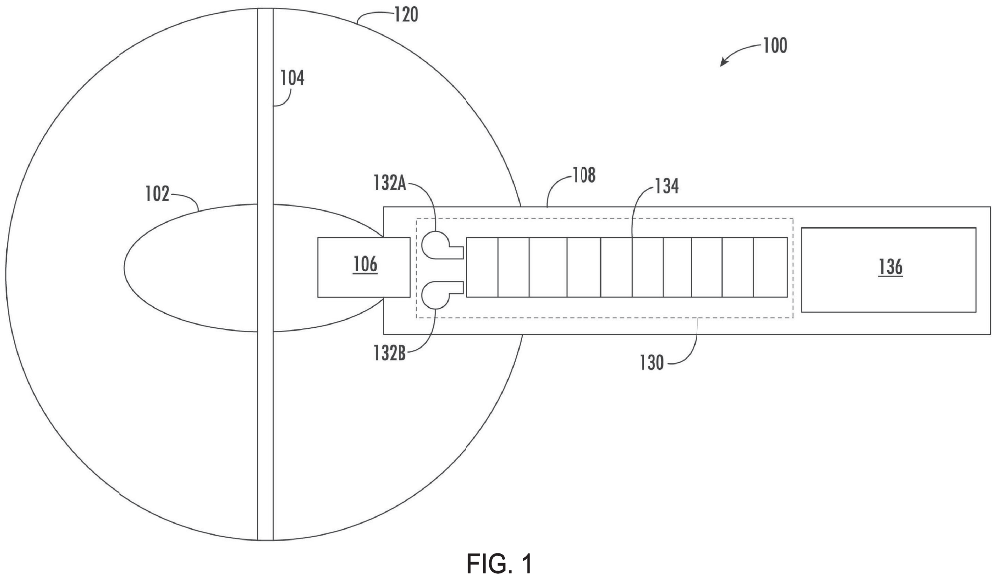

FIG. 1 illustrates a vehicle 100 in accordance with one or more embodiments of the present disclosure. In various embodiments, vehicle 100 may be a helicopter having a fuselage 102, a rotor 104 with a rotor rotation area 120, a fuel cell system 106, and fuel cell cooling system 130. The fuel cell cooling system 130 may include one or more air motive flow sources 132A and 132B, one or more heat exchangers 134, and one or more directional thruster(s) 136.

The fuel cell cooling system 130 may be located in a vehicle body. In various embodiments, the vehicle 100 may be a helicopter with the fuel cell cooling system 130 being located in a tail or tail boom 108 of the helicopter. It will be appreciated that the vehicle body of a different type of vehicle may be different, such as an airplane may locate the fuel cell cooling system 130 in the airplane body.

In various embodiments, one or more air inlets (not illustrated) may be located near the air motive flow sources 132A, 132B to allow for an intake of air. In various embodiments, an air inlet may be a ram air inlet. In various embodiments, an air inlet may be associated with one or more air filters used to filter the incoming air. In embodiments of helicopters, the one or more air inlets may be located near or in the tail boom 108 under the rotor rotation area 120 of the rotor 104.

Vehicle 100 in the form of a helicopter may have a propulsion system where rotor 104 is driven by an associated electric motor. To power the electric motor, electricity may be generated by the fuel cell system 106. Control of the propulsion system, fuel cell system 106, and fuel cell cooling system 130 may be with a vehicle control system that includes a processor and a memory that generates one or more control signals for controlling the vehicle 100 based on, among other things, one or more programs stored in the vehicle control system. In various embodiments, vehicle 100 control may be performed by a flight control system.

To generate electricity, the fuel cell system 106 may use a fuel medium. In various embodiments, the fuel medium may be hydrogen. The hydrogen may be used by the fuel cell system 106 to generate electricity, which also generates water and heat via an exothermic reaction. The electricity may be used for, among other things, providing power to the propulsion system. The heat may be transferred to the fuel cell cooling system 130, such as with one or more cooling lines that transmit a cooling medium (e.g., a coolant liquid such as, but not limited to, an ethylene glycol and water mixture) for cooling. The cooling medium may be used in liquid coolant circuit of one or more coolant loops, which may be referred to as a fluid coolant loops. An example of a coolant loop is a two-phased coolant loop.

The fuel cell cooling system 130 may cool the cooling medium. The fuel cell cooling system 130 may include one or more air motive flow sources 132A and 132B that are used to take in air from one or more inlets and generate air motive flow. In various embodiments, the air motive flow sources 132 may be blowers, compressors, or the like that are used to generate air motive flow.

The air motive flow generated by the one or more air motive flow sources 132 may be transmitted (e.g., blown) to and through one or more heat exchangers 134. When the air motive flow is received at the heat exchanger(s) 134, the air motive flow will typically be at a lower temperature than the cooling medium circulating through the heat exchanger(s) 134. The cooler air motive flow passing through the heat exchanger(s) 134 circulating the cooling medium will cool the cooling medium and heat the air motive flow. Many different heat exchangers may be used including but not limited to micro-tube heat exchangers, bar and fin type heat exchangers, micromatrix heat exchangers, or any other heat exchanger where coolant can flow and transfer heat away from the fuel cell system 106.

The one or more directional thrusters 136 receive air motive flow passed through the one or more heat exchangers 134. The directional thrusters 136 direct the air motive flow as thrust in a controlled direction. Directional control may be provided via one more control signals received from a vehicle control system (e.g., a flight control system). Various embodiments of directional thrusters 136 are described herein.

In various embodiments of a vehicle 100 of a helicopter, the thrust from the directional thrust may be used to, among other things, provide vehicle movement control. Vehicle attitude may be controlled by using the thrust as a yaw control mechanism. For example, the thrust may be directed to a left side or a right side of the tail boom 108 to control the yaw of the vehicle 100.

In various embodiments, the vehicle 100 may be an aircraft such as a helicopter. The thrust generated by the fuel cell cooling system 130 may be used for yaw control. In various embodiments, the rotation of the rotor 104 enables the vehicle 100 to generate lift, the rotation of the rotor 104 generates torque that may require an antitorque system that may utilize the thrust from the directional thruster 136 to assist in controlling the flight of the helicopter. In various embodiments of vehicle 100 comprising a helicopter, the helicopter experiences a yawing moment. This is a force that causes a helicopter to rotate around its vertical axis. The thrust of the directional thruster 136 may be used to counteract or control the yaw of the vehicle 100 by directing the thrust in the direction that force from the rotor 104 rotation is pushing the vehicle. Alternatively the thrust may be used via the Coanda effect by directing the thrust across a control surface, such as a surface of the tail boom causing a decrease in pressure adjacent the control surface and hence force applied to counteract the yaw.

In various embodiments, the thrust may alternatively or additionally be directed and used to control the pitch of the vehicle 100. For example, the directional thruster(s) 136 may direct the thrust in a vertical direction as a pitch control mechanism.

In various embodiments, the thrust may alternatively or additionally be directed forward or rearward to control or assist with the propulsion of the vehicle.

The one or more air motive flow sources 132 may be electrically powered with electricity generated by the fuel cell system 106.

When providing electricity generated by the fuel cell system 106 to, for example, the air motive flow source(s) 132, the heat produced is transported via the cooling medium to the one or more heat exchangers 134. In various embodiments, the heat exchangers 134 may include a coolant circuit loop. Alternatively or additionally, the heat exchangers 134 may include a two-phase pumped coolant loop. The heat exchangers 134 are configured to cool the first cooling medium with the air motive flow passing through the one or more heat exchangers 134.

It will be appreciated that embodiments of vehicles that are not a vehicle 100 of a helicopter may have different components and/or systems. For example, while a helicopter may have a propulsion system including a rotor 104 powered by an electric motor to generate propulsion for the helicopter, other vehicles may have another propulsion system driven by one or more electric motors. As another example, a vehicle 100 of a helicopter may have a main rotor system, an antitorque system, electric motors, cockpit electronics, environmental systems, and a helicopter electrical system that may be used to generate one or more data signals or monitoring signals for a vehicle control system (e.g., flight control system) to use to generate control signals.

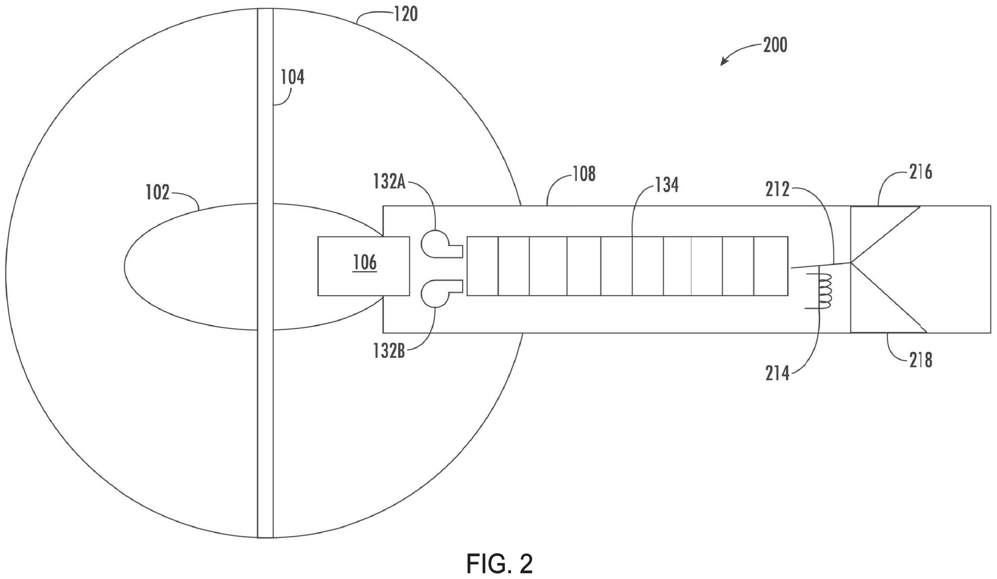

FIG. 2 illustrates a vehicle with a directional thruster 136 of a controllable vane in accordance with one or more embodiments of the present disclosure. In various embodiments, a vehicle 200 of a helicopter may be similar to vehicle 100 and have a directional thruster 136 of a vane 212 with an actuator 214. The actuator 214 may be controlled by the vehicle control system (e.g., flight control system) to actuate the actuator 214 to direct the air motive flow in one more directions. For example, the thrust may be directed to a first air outlet 216 or a second air outlet 218. By directing the air motive flow to an air outlet 216, 218, the fuel cell cooling system 130 may use the air motive flow as thrust in a first direction or a second direction. This thrust may provide, for example, yaw control. In an instance where the vehicle 200 is controlled to direct the tail boom 108 to the right (or left), the actuator 214 will control the vane 212 to open or close to direct the thrust to an opposite side (e.g., left side (or right side)) of the tail boom 108.

In various embodiments, the air outlets 216, 218 may be referred to as exhausts, exhaust outlets, or exhaust ports.

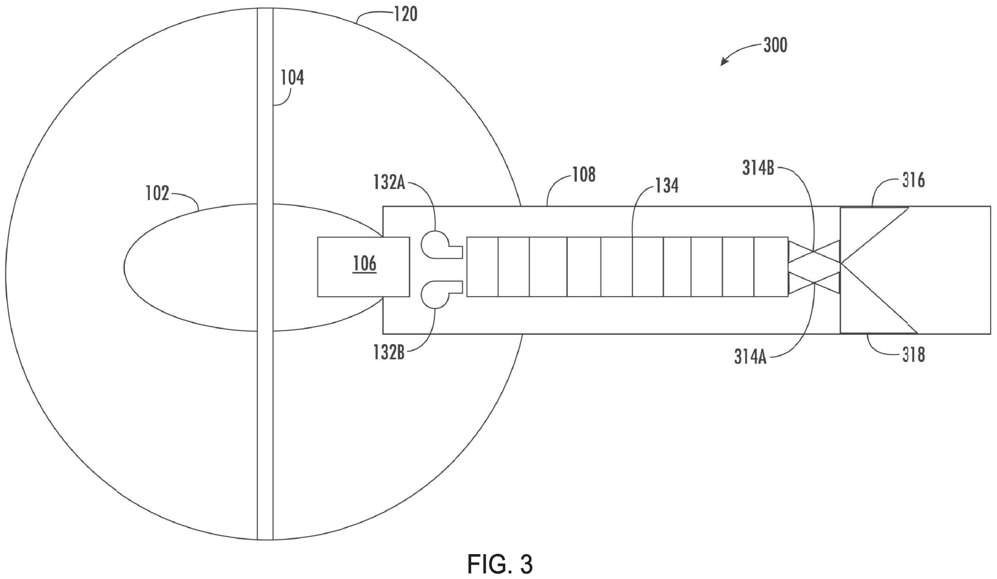

FIG. 3 illustrates a vehicle with a directional thruster 136 of flow control valves in accordance with one or more embodiments of the present disclosure. In various embodiments, a vehicle 300 of a helicopter may be similar to vehicle 100 and have a directional thruster 136 of a one or more control valves 314. The one or more control valves 314 may be controlled by the vehicle control system (e.g., flight control system) to opened or closed to direct the air motive flow in one more directions. For example, the thrust may be directed to a first air outlet 316 or a second air outlet 318. By directing the air motive flow to an air outlet 316, 318, the fuel cell cooling system 130 may use the air motive flow as thrust in a first direction or a second direction. This thrust may provide, for example, yaw control. In an instance where the vehicle 300 is controlled to direct the tail boom 108 to the right (or left), the control valve(s) 314 will be controlled to open or close to direct the thrust to an opposite side (e.g., left side (or right side)) of the tail boom 108.

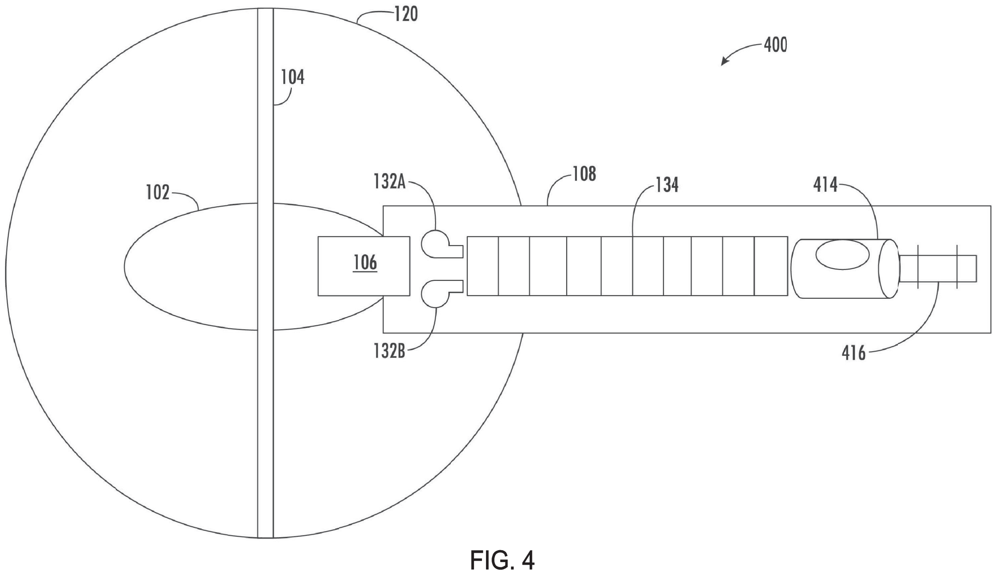

FIG. 4 illustrates a vehicle with a directional thruster 136 of a rotating drum in accordance with one or more embodiments of the present disclosure. In various embodiments, a vehicle 400 of a helicopter may be similar to vehicle 100 and have a directional thruster 136 of a rotating drum 414 controlled by an actuator 416. The actuator 416 may be an angle control actuator, which may be referred to as a drum angle control actuator. The rotating drum 414 may receive the air motive flow and direct the air motive flow through one or more openings in the drum of the rotating drum 414 to direct the thrust in one or more directions. The tail boom 108 may include one or more air outlets (not illustrated) through which the thrust from the rotating drum 414 may direct the air motive flow as thrust. The rotating drum 414 may be controlled by the vehicle control system (e.g., flight control system) to be rotated to an angle to control the direction of the opening in the rotating drum 414 to direct the air motive flow in one more directions. By directing the air motive flow to an air outlet, the fuel cell cooling system 130 may use the air motive flow as thrust in a first direction or a second direction. This thrust may provide, for example, yaw control. In an instance where the vehicle 400 is controlled to direct the tail boom 108 to the right (or left), the rotating drum 414 is controlled by the actuator 416 to direct the thrust to an opposite side (e.g., left side (or right side)) of the tail boom 108.

It will be appreciated that while FIGS. 1-4 are illustrated views from a top-down perspective that may assist with illustrating how yaw may be controlled, various embodiments of the fuel cell cooling system 130 may be configured and used to also control pitch and propulsion with the thrust as directed from a directional thruster 136.

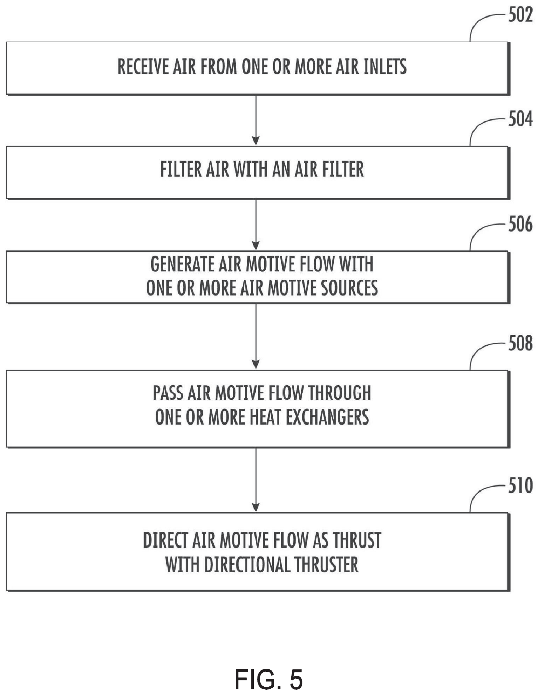

FIG. 5 illustrates a flowchart of example operations for fuel cell cooling system in accordance with one or more embodiments of the present disclosure.

At operation 502, receive air from one or more air inlets. Air is received through the one or more air inlets to be provided to the air motive flow sources. The air may be ambient air around a vehicle 100. In various embodiments, the air inlets may be part of an air intake, such as a ram air intake.

At operation 504, filter the air with an air filter. The air from the ambient may include particulates that may be filtered out. In various embodiments, the filter may also direct the air flow to reduce turbulent air flow.

At operation 506, generate air motive flow with the air in one or more air motive flow sources. Air motive flow sources 132 (e.g., blowers, compressors, etc.) may be used to intake air and generate air motive flow with increased speed and/or density. The air motive flow may exit the air motive flow sources 132 at a faster velocity and/or higher pressure than the air entered and be directed to one or more heat exchangers 134.

At operation 508, pass air motive flow through the one or more heat exchangers. The air motive flow may be passed through or over one or more heat exchangers 134. As the air motive flow passes over the heat exchangers 134, the cool air of the air motive flow is heated and the cooling medium circulating in the heat exchangers 134 is cooled. In various embodiments, the heat exchanger(s) 134 may be one or more radiators.

At operation 510, direct air motive flow as thrust with directional thruster. The directional thruster 136 may receive the air motive flow from the heat exchanger(s) 134 and direct the air motive flow as thrust in one or more directions. The thrust may be directed out of an exhaust in one or more directions to provide yaw control, pitch control, and/or propulsion control.

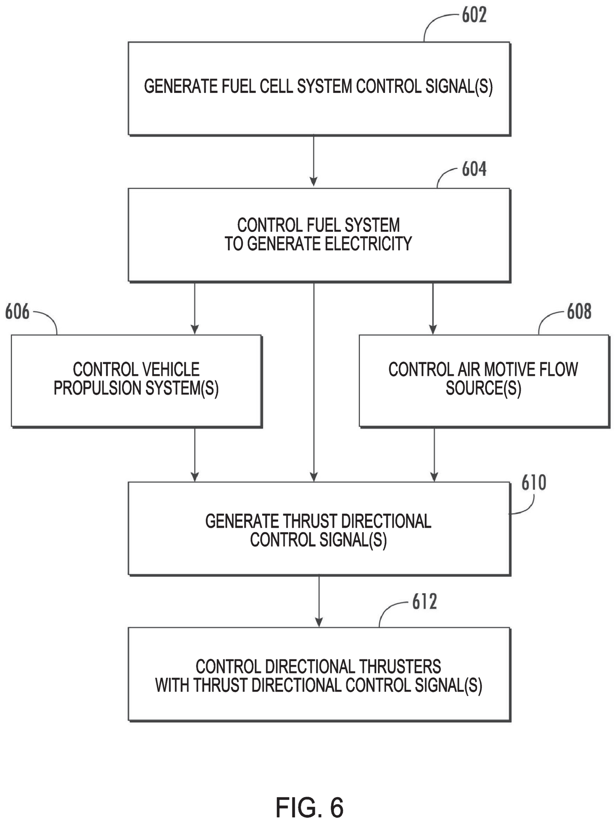

FIG. 6 illustrates a flowchart of example operations for a vehicle control system in accordance with one or more embodiments of the present disclosure.

At operation 602, the vehicle control system generates fuel cell system control signal(s). The vehicle control system (e.g., a flight control system or flight control computer) may generate one or more fuel cell system control signals to control the fuel cell system 106 to generate electricity. These fuel cell system control signals are transmitted to the fuel cell system 106.

At operation 604, the vehicle control system controls the fuel cell system to generate electricity. The fuel cell system 106, receiving the fuel cell system control signals generated by the vehicle control system, may be controlled to generate electricity. In various embodiments, this may include using the fuel medium, such as hydrogen, of the fuel cell system 106 to generate electricity that may be used to provide power to one or more components and/or systems of the vehicle. The electricity generated may be transmitted to these components and/or systems along with one or more control signals generated by the vehicle control system for controlling those components and/or system. In various embodiments, controlling the generation and transmission of electricity may be the control of the other components and/or system. For example, by controlling how much electricity is generated by the fuel cell system 106 and transmitted to an air motive flow source 132A of a blower may control powering on and the speed of the blower. In various embodiments, control signals to the blower may also be needed to control, for example, the powering on and speed of the blower in addition to providing the blower electricity.

An example of the control signal(s) to the fuel cell system 106 may include a control signal to command the fuel cell system 106 to generate a required amount of electric power, which may be based on the vehicle control system determining how to maintain vehicle control in view of one or more inputs from a vehicle operator (e.g., pilot) and one or more sensors (e.g., yaw, pitch, air temperature, etc.).

At operation 606, the vehicle control system generates signals to control the vehicle propulsion system. The electricity generated is provided to the propulsion system of the vehicle. In various embodiments of vehicle 100 of a helicopter, the propulsion system may include the rotor 104 and one or more electric motors that may receive the electricity to the motors to drive the rotor 104.

At operation 608, the vehicle control system generates signals to control the air motive flow sources. The electricity generated is provided to the air motive flow sources 132 of the vehicle. In various embodiments of vehicle 100 of a helicopter, the air motive flow sources 132 may be, for example, a blower or compressor that intakes ambient air and blows and/or compresses the air to generate air motive flow that is provided to a heat exchanger 134 and then a directional thruster 136. The generation of the air motive flow may be a result of the vehicle control system transmitting a control signal to the fuel cell system 106 to electrically power the one or more air motive flow sources 132.

At operation 610, the vehicle control system generates thrust directional control signals. The thrust is received by the directional thruster 136 as a result of the air motive flow sources 132 intaking ambient air to generate air motive flow through the heat exchanger 134 to the directional thruster 136. The thrust control signal directs the thrust generated by the movement of air through the heat exchanger 134 from the one or more air motive flow sources 132 to a first side of the vehicle 100 or a second side of the vehicle 100 or to a first and a second side of the vehicle 100 to provide yaw control, pitch control, and/or propulsion control.

The vehicle control system (e.g., a flight control system or flight control computer) may generate one or more thrust control signals to control the directional thruster 136, particularly the direction of the directional thruster 136. In various embodiments, the thrust control signals may be generated to control one or more actuators that are used to direct the air flow motive to cause thrust for the vehicle 100. In various embodiments, the thrust control signals may be generated to control one or more valves that are used to direct the air flow motive to cause thrust for the vehicle 100.

In various embodiments, the thrust control signals may be generated to control rotation of a drum angle control actuator 416 that is used to direct the air flow motive to cause thrust for the vehicle 100. The thrust control signal(s) may be generated based on one or more inputs from a vehicle operator (e.g., pilot) or on one or more sensor inputs. The thrust control signal(s) are transmitted to the directional thruster 136.

At operation 612, control directional thruster(s) with thrust control signal(s). The thrust control signal(s) may be used to control the directional thruster 136 to direct the thrust of the air motive flow in one or more directions. In various embodiments, the thrust may act as a yaw control mechanism, a pitch control mechanism, and/or a propulsion control mechanism.

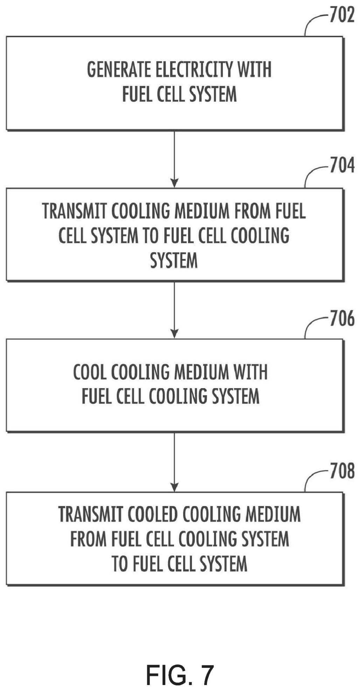

FIG. 7 illustrates a flowchart of example operations for cooling a cooling medium in accordance with one or more embodiments of the present disclosure.

At operation 702, generate electricity with fuel cell system. The fuel of the fuel cell system 106 may be used to generate electricity, which produces heat. The heat may cause a cooling medium circulating in one or more cooling loops of the fuel cell system 106 to be heated.

At operation 704, transmit cooling medium from fuel cell system to fuel cell cooling system. The cooling medium, having been heated from the generation of electricity, may be transmitted to the fuel cell cooling system 130. The cooling medium may be transmitted via one or more cooling medium lines to one or more heat exchangers 134 of the fuel cell cooling system 130.

At operation 706, cool cooling medium with fuel cell cooling system. The cooling medium is cooled by the fuel cell cooling system 130 with one or more heat exchangers 134. For example, the cooling medium is circulated in the heat exchanger(s) 134 where the cooler air of the air motive flow cools the cooling medium through an exchange of heat via the heat exchangers 134.

At operation 708, transmit cooled cooling medium from fuel cell cooling system to fuel cell system. The cooling medium, having been cooled, is transmitted from the fuel cell cooling system 130 back to the fuel cell system 106 to cool heat generated by the fuel cell system 106 when generating electricity. The cooling medium may be transmitted by one or more cooling medium return lines.

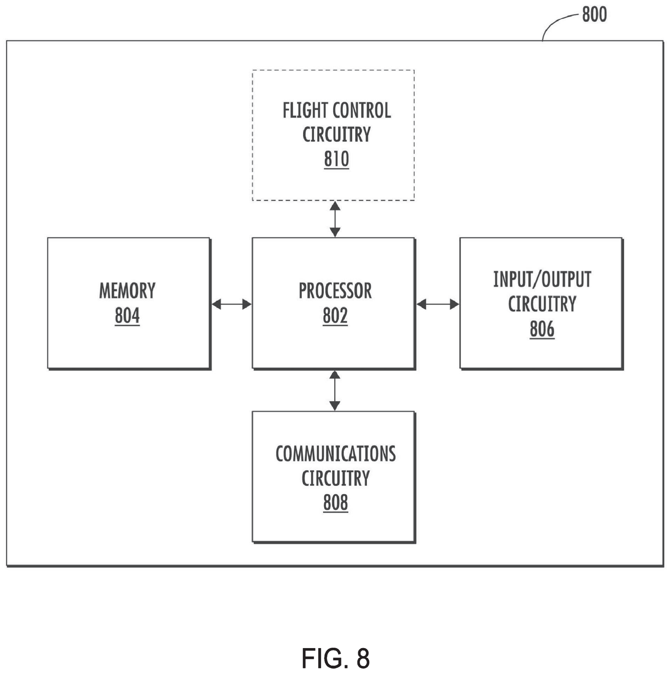

FIG. 8 illustrates a block diagram of an example device in accordance with various example embodiments of the present disclosure. In various embodiments, the fuel cell cooling system may include the components of the device 800. In various embodiments, the device 800 may be a computing device. In various embodiments, the device 800 may be or may include a vehicle control system, such as a flight control system.

A device 800 may include a processor 802, memory 804, input/output circuitry 806, communications circuitry 808, and/or flight control circuitry 810, which may allow the device 800 to execute and perform some or all of the operations described herein.

The processor 802 (and/or co-processor or any other processing circuitry assisting or otherwise associated with the processor) may be in communication with the memory 804 via a bus for passing information among components of the device 800. The memory 804 is non-transitory and may include, for example, one or more volatile and/or non-volatile memories, or some combination thereof. The memory 804 may be an electronic storage device (e.g., a computer readable storage medium). The memory 804 may be configured to store information, data, content, applications, instructions, or the like, for enabling a system or apparatus to carry out various functions and/or operations in accordance with the present disclosure.

Processor 802 may be embodied as, for example, one or more processing devices configured to perform independently. Additionally, or alternatively, processor 802 may include one or more processors configured in tandem via a bus to enable independent execution of instructions, pipelining, and/or multithreading. Processor 802 may, for example, be embodied as various means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. Accordingly, although illustrated as a single processor, in various embodiments, processor 802 comprises a plurality of processors. The plurality of processors may be embodied on a single device or may be distributed across a plurality of such devices collectively configured to function as device 800. The plurality of processors may be in operative communication with each other and may be collectively configured to perform one or more functionalities of device 800 as described herein.

In an example embodiment, processor 802 is configured to execute instructions stored in the memory 804 or otherwise accessible to processor 802. Alternatively, or additionally, the processor 802 may be configured to execute hard-coded functionality. As such, whether configured by hardware or software methods, or by a combination thereof, the processor 802 may represent an entity (e.g., physically embodied in circuitry) capable of performing operations according to an embodiment of the present disclosure while configured accordingly. Alternatively, as another example, when the processor 802 is embodied as an executor of software instructions, the instructions may specifically configure processor 802 to perform one or more algorithms and/or operations described herein when the instructions are executed. For example, these instructions, when executed by processor 802, may cause device 800 to perform one or more of the functionalities of device 800 as described herein.

Memory 804, although illustrated as a single memory, may comprise a plurality of memory components. The plurality of memory components may be embodied on a single device or distributed across a plurality of computing devices. In various embodiments, memory 804 may comprise, for example, a hard disk, random access memory, cache memory, flash memory, a compact disc read only memory (CD-ROM), digital versatile disc read only memory (DVD-ROM), an optical disc, circuitry configured to store information, or some combination thereof. Memory 804 may be configured to store information, data, applications, instructions, or the like for enabling device 800 to carry out various functions in accordance with example embodiments discussed herein. For example, in at least some embodiments, memory 804 is configured to buffer data for processing by processor 802. Additionally, or alternatively, in at least some embodiments, memory 804 is configured to store program instructions for execution by processor 802. Memory 804 may store information in the form of static and/or dynamic information. This stored information may be stored and/or used by device 800 during the course of performing its functionalities.

The input/output circuitry 806 may be in communication with processor 802 to provide an audible, visual, mechanical, or other output and/or, in various embodiments, to receive an indication of an input. In that sense, input/output circuitry 806 may include means for performing analog-to-digital and/or digital-to-analog data conversions. Input/output circuitry 806 may include support, for example, for a display, touchscreen, keyboard, button, click wheel, mouse, joystick, an image capturing device (e.g., a camera), motion sensor (e.g., accelerometer and/or gyroscope), microphone, audio recorder, speaker, biometric scanner, and/or other input/output mechanisms. Input/output circuitry 806 may comprise a user interface, web user interface, a mobile application, a kiosk, or the like. The processor 802 and/or user interface circuitry comprising the processor 802 may be configured to control one or more functions of a display or one or more user interface elements through computer program instructions (e.g., software and/or firmware) stored on a memory accessible to the processor 802 (e.g., memory 804, and/or the like). In various embodiments, aspects of input/output circuitry 806 in device 800 may be reduced when implemented also or instead as an end-user machine or other type of device designed for complex user interactions. In some embodiments (like other components discussed herein), input/output circuitry 806 may even be eliminated from device 800. Input/output circuitry 806 may be in communication with memory 804, communications circuitry 808, and/or any other component(s), such as via a bus. Although more than one input/output circuitry and/or other component may be included in device 800, only one is shown in FIG. 6 to avoid overcomplicating the disclosure (e.g., like the other components discussed herein).

Communications circuitry 808 may be any means such as a device or circuitry embodied in either hardware or a combination of hardware and software that is configured to receive and/or transmit data from/to a network and/or any other device, circuitry, or module in communication with device 800. In this regard, the communications circuitry 808 may include, for example, a network interface for enabling communications with a wired or wireless communication network. Communications circuitry 808 may be configured to receive and/or transmit any data that may be stored by memory 804 using any protocol that may be used for communications between devices. For example, the communications circuitry 808 may include one or more network interface cards, antennae, transmitters, receivers, buses, switches, routers, modems, and supporting hardware and/or software, and/or firmware/software, or any other device suitable for enabling communications via a network. Additionally, or alternatively, the communication interface may include the circuitry for interacting with the antenna(s) to cause transmission of signals via the antenna(s) or to handle receipt of signals received via the antenna(s). These signals may be transmitted by device 800 using any of a number of wireless personal area network (PAN) technologies, such as Bluetooth^{®} v1.0 through v3.0, Bluetooth Low Energy (BLE), infrared wireless (e.g., IrDA), ultra-wideband (UWB), induction wireless transmission, or the like. In addition, it should be understood that these signals may be transmitted using Wi-Fi, Near Field Communications (NFC), Worldwide Interoperability for Microwave Access (WiMAX) or other proximity-based communications protocols. Communications circuitry 808 may additionally or alternatively be in communication with the memory 804, input/output circuitry 806 and/or any other component of device 800, such as via a bus.

In various embodiments, flight control circuitry 810 is included in device 800, the flight control circuitry 810 may be configured to facilitate the functionality and/or operations described herein. In various embodiments, flight control circuitry 810 may also be included and configured to perform the functionality described herein related to providing the fuel cell cooling system with directions from the vehicle control computer (e.g., a flight control computer). Flight control circuitry 810 includes hardware components and/or software configured to support interface component functionality, features, and/or services of the device 800. The flight control circuitry 810 may utilize processing circuitry, such as the processor 802, to perform its corresponding operations, and may utilize memory 804 to store collected information.

### Conclusion

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, may be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

### Examples:

1. A vehicle system includes a fuel cell system, a coolant loop coupled to the fuel cell system, a heat exchanger thermally coupled to the coolant loop, an air motive flow source configured to receive air at an air inlet and generate air motive flow through the heat exchanger, and a directional thruster configured to receive air motive flow passed through the heat exchanger and direct the air motive flow as thrust.
2. The vehicle system of example 1, wherein the directional thruster is controlled to direct the thrust for vehicle attitude control.
3. The vehicle system of example 2, wherein the directional thruster is controlled to direct the thrust for vehicle yaw control.
4. The vehicle system of example 2, wherein the directional thruster is controlled to direct the thrust for vehicle pitch control.
5. The vehicle system of any of examples 1-4, wherein the directional thruster comprises a rotating drum and a drum angle control actuator.
6. The vehicle system of any of examples 1-5, wherein the directional thruster comprises a controllable vane with actuator.
7. The vehicle system of any of examples 1-6, wherein the directional thruster comprises one or more flow control valves.
8. The vehicle system of any of examples 1-7, wherein the vehicle is a helicopter, an airplane, or a drone.
9. The vehicle system of any of examples 1-8, wherein the vehicle is a helicopter and the heat exchanger, the air motive flow source, and the directional thruster are located in a tail boom of the helicopter.
10. The vehicle system of any of examples 1-9, wherein the coolant loop includes a two-phase pumped loop.
11. A vehicle system includes a fuel cell system comprising one or more coolant loops, one or more heat exchangers connected to the fuel cell system to cool the one or more coolant loops, one or more air motive flow sources configured to receive air from one or more air inlets and generate air motive flow through the one or more heat exchangers, one or more directional thrusters configured to receive air motive flow passed through the one or more heat exchangers and direct the air motive flow as thrust, and wherein the one or more heat exchangers are configured to cool the one or more coolant loops with the air motive flow passing through the one or more heat exchangers.
12. A method controls a vehicle having a vehicle system that includes a fuel cell system comprising one or more coolant loops, one or more heat exchangers connected to the fuel cell system to cool the one or more coolant loops, one or more air motive flow sources configured to receive air from one or more air inlets and generate air motive flow through the one or more heat exchangers, one or more directional thrusters configured to receive air motive flow passed through the one or more heat exchangers and direct the air motive flow as thrust, and wherein the one or more heat exchangers are configured to cool the one or more coolant loops with the air motive flow passing through the one or more heat exchangers. The method includes receiving air from one or more air inlets, generating, with the one or more air motive flow sources, air motive flow through the one or more heat exchangers, cooling, with the air motive flow, a cooling medium circulating in the heat exchangers and the one or more coolant loops, and controlling the vehicle with the thrust.
13. The method of example 12, wherein controlling the vehicle with the thrust controls vehicle attitude.
14. The method of any of examples 12-13, wherein controlling vehicle attitude controls yaw or pitch of the vehicle.
15. The method of any of examples 12-14, wherein the directional thruster is comprised of a rotating drum and a drum angle control actuator.
16. The method of any of examples 12-15, wherein the directional thruster is comprised of a controllable vane with actuator.
17. The method of any of examples 12-16, wherein the directional thruster is comprised of one or more flow control valves.
18. The method of any of examples 12-17, wherein the one or more coolant loops include a two-phase pumped loop.
19. The method of any of examples 12-18, wherein the vehicle is a helicopter, an airplane, or a drone.
20. The method of any of examples 12-19, wherein the vehicle is a helicopter and the one or more heat exchanger, the one or more air motive flow sources, and the one or more directional thrusters are located in a tail boom of the helicopter.

The functions or algorithms described herein may be implemented in software in one embodiment. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

The functionality can be configured to perform an operation using, for instance, software, hardware, firmware, or the like. For example, the phrase "configured to" can refer to a logic circuit structure of a hardware element that is to implement the associated functionality. The phrase "configured to" can also refer to a logic circuit structure of a hardware element that is to implement the coding design of associated functionality of firmware or software. The term "module" refers to a structural element that can be implemented using any suitable hardware (e.g., a processor, among others), software (e.g., an application, among others), firmware, or any combination of hardware, software, and firmware. The term, "logic" encompasses any functionality for performing a task. For instance, each operation illustrated in the flowcharts corresponds to logic for performing that operation. An operation can be performed using, software, hardware, firmware, or the like. The terms, "component," "system," and the like may refer to computer-related entities, hardware, and software in execution, firmware, or combination thereof. A component may be a process running on a processor, an object, an executable, a program, a function, a subroutine, a computer, or a combination of software and hardware. The term, "processor," may refer to a hardware component, such as a processing unit of a computer system.

Furthermore, the claimed subject matter may be implemented as a method, apparatus, or article of manufacture using standard programming and engineering techniques to produce software, firmware, hardware, or any combination thereof to control a computing device to implement the disclosed subject matter. The term, "article of manufacture," as used herein is intended to encompass a computer program accessible from any computer-readable storage device or media. Computer-readable storage media can include, but are not limited to, magnetic storage devices, e.g., hard disk, floppy disk, magnetic strips, optical disk, compact disk (CD), digital versatile disk (DVD), smart cards, flash memory devices, among others. In contrast, computer-readable media, i.e., not storage media, may additionally include communication media such as transmission media for wireless signals and the like.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A vehicle system [100] comprising:
a fuel cell system [106];
a coolant loop coupled to the fuel cell system;
a heat exchanger [134] thermally coupled to the coolant loop;
an air motive flow source [132A, 132B] configured to receive air at an air inlet and generate air motive flow through the heat exchanger; and
a directional thruster [136] configured to receive air motive flow passed through the heat exchanger and direct the air motive flow as thrust.

2. The vehicle system of claim 1, wherein the directional thruster is controlled to direct the thrust for vehicle attitude control.

3. The vehicle system of claim 2, wherein the directional thruster is controlled to direct the thrust for vehicle yaw control.

4. The vehicle system of claim 2, wherein the directional thruster is controlled to direct the thrust for vehicle pitch control.

5. The vehicle system of any one of claims 1-4, wherein the directional thruster comprises a rotating drum [416] and a drum angle control actuator [416].

6. The vehicle system of any one of claims 1-4, wherein the directional thruster comprises a controllable vane [212] with actuator [214].

7. The vehicle system of any one of claims 1-4, wherein the directional thruster comprises one or more flow control valves [314A, 314B].

8. The vehicle system of any one of claims 1-4, wherein the vehicle is a helicopter, an airplane, or a drone.

9. The vehicle system of any one of claims 1-4, wherein the vehicle is a helicopter and the heat exchanger, the air motive flow source, and the directional thruster are located in a tail boom [108] of the helicopter.

10. The vehicle system of any one of claims 1-4, wherein the coolant loop includes a two-phase pumped loop.

11. A vehicle system [100] comprising:
a fuel cell system [106] comprising one or more coolant loops;
one or more heat exchangers [134] connected to the fuel cell system to cool the one or more coolant loops;
one or more air motive flow sources [132A, 132B] configured to receive air from one or more air inlets and generate air motive flow through the one or more heat exchangers;
one or more directional thrusters [136] configured to receive air motive flow passed through the one or more heat exchangers and direct the air motive flow as thrust; and
wherein the one or more heat exchangers are configured to cool the one or more coolant loops with the air motive flow passing through the one or more heat exchangers.

12. A method of controlling a vehicle [100] comprising:
providing a vehicle system [100] comprising:
a fuel cell system [106] comprising one or more coolant loops;
one or more heat exchangers [134] connected to the fuel cell system to cool the one or more coolant loops;
one or more air motive flow sources [132A, 132B] configured to receive air from one or more air inlets and generate air motive flow through the one or more heat exchangers;
one or more directional thrusters [136] configured to receive air motive flow passed through the one or more heat exchangers and direct the air motive flow as thrust; and
wherein the one or more heat exchangers are configured to cool the one or more coolant loops with the air motive flow passing through the one or more heat exchangers;
receiving [502] air from one or more air inlets;
generating [506], with the one or more air motive flow sources, air motive flow through the one or more heat exchangers;
cooling [508], with the air motive flow, a cooling medium circulating in the heat exchangers and the one or more coolant loops; and
controlling [510, 610, 612] the vehicle with the thrust.

13. The method of claim 12, wherein controlling the vehicle with the thrust controls vehicle attitude.

14. The method of claim 13, wherein controlling vehicle attitude controls yaw or pitch of the vehicle.

15. The method of any one of claims 12-14, wherein the directional thruster is comprised of a rotating drum [414] and a drum angle control actuator [416], wherein the directional thruster is comprised of at least one of a controllable vane with actuator or one or more flow control valves.
